# EUROPEAN PATENT SPECIFICATION

(11) **EP 0 489 133 B1**
(45) Date of publication and mention of the grant of the patent: **02.11.1994**
(21) Application number: 91911099.9
(22) Date of filing: 25.06.1991
(51) Int. Cl.: C01B 31/08

(54) **METHOD FOR MANUFACTURING ACTIVATED CARBON FROM CELLULOSIC MATERIAL**
VERFAHREN ZUR HERSTELLUNG VON AKTIVKOHLE AUS ZELLULOSEHALTIGEM MATERIAL
PROCEDE DE FABRICATION DE CHARBON ACTIF A PARTIR D'UN MATERIAU CELLULOSIQUE

(30) Priority: 27.06.1990 FI 903254
(43) Date of publication of application: 10.06.1992
(73) Proprietor: KEMIRA OY SÄTERI, SF-37601 Valkeakoski (FI)
(72) Inventor: NOUSIAINEN, Pertti, SF-33720 Tampere (FI); HEIDARI, Shahram, SF-33100 Tampere (FI)
(74) Representative: Smulders, Theodorus A.H.J., Ir.
(86) International application number: FI9100197
(87) International publication number: WO9200244

(56) References cited:
- DE-C- 2 915 640
- GB-A- 2 225 003

## Description

The invention relates to a method for manufacturing activated carbon from cellulosic material which method comprises treatment of the material with a Lewis acid and subsequent pyrolysis and activation in a suitable atmosphere and using a suitable temperature-time program.

The method in question is presented e.g. in the GB patent 1301101 and in the DE patent 2915640. It is known to make activated carbon from cellulosic fibrous material by performing pyrolysis and activation of the fibres in a suitable atmosphere by raising the temperature according to a suitable program up to about 500 - 1000 °C. On one hand, this heat treatment causes a certain weight loss due to pyrolysis and, at the same time, it generates microporosity which is typical of activated carbon. In order to reduce weight losses, methods have been developed and presented in patents by which the fibrous starting material of activated carbon like e.g. cloth is first treated with a solution containing Lewis acid like e.g. a solution of aluminum chloride, zinc chloride or calcium chloride or a solution of their mixture.

The above mentioned methods have greatly improved the weight losses at later stages resulting in higher strength of activated carbon products like cloths of activated carbon manufactured from the fibrous cellulosic material. However, it has not been possible to obtain certain other optimal properties which are essential to activated carbons like e.g. porosity.

The object of the invention is to present a method which improves the properties of activated carbon manufactured from cellulosic material, especially porosity but also other properties. For obtaining this object, the method according to the invention is mainly characterized in that, prior to pyrolysis, the material functioning as the raw material for activated carbon is brought into contact with lithium ions.

The invention is based on the surprising observation that lithium together with Lewis acids functions superbly in the cellulosic structure of the raw material. Lithium has been observed to improve yield, to enhance functioning of Lewis acids and particularly to increase specific surface area without reducing the strength of the product.

The cellulosic material to be pretreated is preferably brought into contact with lithium ions by impregnating the material in a solution containing lithium ions. This impregnation is most suitably performed at the same stage as the treatment with Lewis acid, in other words, the treating solution contains, in addition to Lewis acids, some salt containing lithium ions like e.g. lithium chloride.

Various types of cellulosic fibres can be used as the cellulosic starting material, but especially the regenerated cellulosic fibre like viscose fibre has turned out a practical raw material because of its good initial strength and a suitable initial porosity. In that case, high-tenacity viscose fibre, which is known in itself, can be used as raw material. The viscose fibre can be made into a cloth, e.g. before the treatment with Lewis acids and lithium chloride, in which case also the final activated carbon product is in the form of activated carbon cloth.

The different stages of the method according to the invention and the phenomena which take place thereat and which affect the properties of the product will be described more closely in the following.

A cellulosic material is used as a starting material and it can be e.g. in the form of cloth. An advantageous starting material is e.g. viscose fibres with their natural high strength and porosity of a certain degree. A suitable material is e.g. the high-tenacity viscose fibre of 1,0 - 1,3 dtex which is manufactured by the applicant. It has a tensile strength of about 2,9 - 3,2 cN/dtex. The initial porosity of the fibres is within the range 100 - 500 µl/g measured by a mercury porosimeter.

The yarn formed of the fibres is woven into cloth using normal methods and which cloth then functions as the starting material for the activated carbon cloth. At the pretreatment stage, the cloth is impregnated in a solution of Lewis acids. The solution can contain e.g. aluminium chloride or zinc chloride, calcium chloride, ammonium chloride or zinc chloride or any of their mixture. The total concentration of these materials in the impregnation solution is generally about 2 - 10 % by weight. It is possible to use e.g. a mixture of Lewis acids containing roughly the same percentages of salts selected from the group of zinc chloride, calcium chloride, aluminium chloride and ammonium chloride. Lewis acids have been observed to have a beneficial effect on yield at the pyrolysis i.e. at the carbonization stage and on the strength of the final product. Lewis acids have been observed to modify thermal decomposition mechanism of the cellulosic fibre used as the starting material so that the main reaction during carbonization is dehydration i.e. loosening of water whereby yield approaches theoretical in favourable circumstances. Additionally, the improved strength is supposed to be due to the presence of metal ions in the structure of the product.

According to the invention, the starting material is treated with lithium ions so that the ions are allowed to influence the structure of the material. Lithium has been observed to have a surprisingly good influence both on yield and specific surface area. This influence is supposed to result partly from the fact that lithium ions, upon penetrating in between the cellulose chains, disintegrate molecular hydrogen bonds thus allowing the Lewis acids to affect better on the cellulose molecules. In the same way, lithium prevents reformation of hydrogen bonds at the drying stage. When carbon dioxide is used as the activation gas, lithium at the activation stage additionally improves microporosity by increasing the effect of carbon monoxide. This is believed to be associated with the properties of lithium with respect to carbon dioxide. For instance in beverage industry, lithium is used in those soft drinks which contain carbon dioxide for reducing evaporation of carbon dioxide.

There are still some additional properties that make lithium especially suitable for use in pretreatment of cellulosic material in the manufacture of activated carbon. Compared to alkali earths and other alkali metals it has both the smallest atomic radius and the smallest covalent radius. For comparison, the atomic radius (left) and the covalent radius (right) of alkali metals, expressed in ångstroms, are presented below.

| | | |
|---|---|---|
| Li | 2.05 | 1.23 |
| Na | 2.23 | 1.54 |
| K | 2.27 | 2.03 |
| Rb | 2.98 | 2.16 |
| Cs | 3.34 | 2.35 |

Due to their small size, lithium ions can easily penetrate inside the structure into contact with cellulose chains.

Due to its physical properties, lithium chloride also remains well in the structure of the raw material without evaporating therefrom at the high temperatures of the pyrolysis and activation stages.

Treatment with lithium ions is preferably performed at the same stage as treatment with Lewis acids and then the aqueous solution contains some suitable concentration of Lewis acid and a suitable concentration of water soluble lithium salt, preferably lithium chloride. The treatment is preferably done by immersing the starting material in the treating solution but also alternative ways whereby the raw material can be impregnated with the treating solution like spraying are possible. Contact times and treating temperatures can be chosen so that a desired concentration of effective agents (Lewis acids and lithium ions) is obtained.

After treatment, the starting material is dried first by mechanically pressing and then by heating at a temperature of 80 - 120°C. After drying, the starting material consisting of a mixture of fibre and salt is mechanically softened so that its final flexibility does not deteriorate.

Actual manufacturing to a final activated carbon product is done in a suitable atmosphere according to a specific temperature-time program. The starting material is placed in the oven so that it can freely shrink during the heat treatment. At the initial stage, pyrolysis i.e. carbonization is performed at which stage the actual weight losses take place and the carbon skeleton of the final product is formed. Carbonization is done in a suitable protective atmosphere e.g. in carbon dioxide or nitrogen at a temperature of about 300 - 450°C. Activation is done immediately thereafter in a carbon dioxide atmosphere at a temperature of about 500 - 1000 °C whereupon the final activated carbon product with the desired porosity is generated. A significant factor in the above processes is the rate of at which temperature is raised and delay times at certain temperatures which are critical for the formation of the product.

A test series performed according to the method of the invention is described in the following.

From a 15 tex viscose yarn (yarn 2804), which was made of the above mentioned high tenacity viscose fibre, a cloth (MS cloth) was woven whose square weight was 186 g/m². Pieces of cloth were pretreated according to the invention with different solutions which contained Lewis acid and lithium chloride. Furthermore, a reference treatment was done using solutions with no lithium. Compositions and pH's of the aqueous solutions were the following:
- Solution 1:: 1,5% AlCl₃, 3,0% CaCl₂, 3,0% NH₄Cl, pH 3,4
- Solution 2:: The same Lewis acids as in solution 1 and in addition 3,0% LiCl, pH 3,2.
- Solution 3:: 3,0% CaCl₂, 3,0% NH₄Cl, 3,0% ZnCl₂, pH 5,2.
- Solution 4:: The Lewis acids as in solution 3 and in addition 3,0% LiCl, pH 4,5.

Furthermore, two alternative pretreatment programs were used:
A) The solution was allowed to soak into the cloth at the same time as the temperature was raised from 40°C to 80°C at a rate of 10°C/min after which the cloth was kept in the solution for 2 min.
B) The solution was allowed to soak into the cloth for 10 min at room temperature.

In both cases the excess solution was removed after the treatment first mechanically putting the piece five times in succession through press rolls applying a suitable line pressure, which was preferably 18 kp/cm, after which the piece of cloth was dried at 110°-120°C for 2 - 5 min. After drying the piece of cloth, it was still softened mechanically putting it three times in succession through the press rolls applying preferably the above line pressure.

The piece of cloth was placed, after drying and softening, in the oven of a thermobalance so that it was allowed to shrink freely during pyrolysis and activation. During pyrolysis stage, the oven temperature was raised at a rate of 5°C/min from 20°C to 360°C at which temperature the piece was kept for 15 min. After this, temperature was raised at a rate of 10°C/min to 900°C and the sample was kept at this temperature so long that weight losses did not exceed 20% during the activation stage. As the shield atmosphere and the activation atmosphere carbon dioxide was used. Results of the test series are presented in the following table.

**Table**

| Properties of activated carbon cloths prepared by different treating solutions. Solutions 2 and 4 contain lithium. | | | | | | |
|---|---|---|---|---|---|---|
| Solution/Pretreatment | Yield(%) | BET(m²/g) | DP_{w} | DPₙ | PD | Strength |
| 0 | - | - | 2169 | 853 | 2,57 | |
| 1/A | 19 | 520 - 650 | 830 | 369 | 2,25 | brittle |
| 1/B | 21 | 580 - 670 | 899 | 384 | 2,34 | fair |
| 2/A | 18 | 730 | 799 | 364 | 2,20 | good |
| 2/B | 20 | 790 - 810 | 1035 | 458 | 2,26 | good |
| 3/A | 18 | 520 | 2285 | 855 | 2,67 | brittle |
| 3/B | 18 | 550 | 2373 | 910 | 2,61 | fair |
| 4/A | 20 | 800 | 2135 | 907 | 2,35 | good |
| 4/B | 22 | 820 | 2253 | 935 | 2,41 | good |
| 0 = starting material BET = specific surface area DP_{w} = average degree of polymerization by mass DPₙ = average degree of polymerization by number PD = DP_{w}/DPₙ = polydispersity | | | | | | |

Due to smallness of the samples strength values are determined by manual testing.

As it is apparent from the test results, a larger surface area (BET) is obtained with lithium ions using different Lewis acid compositions and pretreatment temperatures. Yield in pyrolysis and in activation can be maintained the same or even increased a little (differences between products obtained by solutions 3 and 4) which is associated with the strength properties of the final product.

The invention is not limited only to the alternatives of the description or the test series but it can be varied within the limits of the idea of the invention set forth in the claims. Suitable starting materials are all the cellulosic materials which are used as starting materials for the production of activated carbon and in which the above phenomena, on which lithium has a favourable effect, take place during manufacturing stages. When regenerated fibres are used as starting materials, lithium ions can be introduced into the cellulose structure by adding a salt containing them like lithium chloride to the solution already prior to regeneration of cellulose. It is, however, more economic to treat the regenerated fibres by a solution containing lithium.

The activated carbon products manufactured in accordance with the method of the invention have, due to their high strength and absorption power, many practical applications in the field of material separation from gases and liquids, of which it can be especially mentioned as examples respirators and various filters.

## Claims

1. Method for manufacturing activated carbon from cellulosic material, which method comprises treatment of the material with a Lewis acid and subsequent pyrolysis and activation in a suitable atmosphere and using a suitable temperature-time program, **characterized** in that, prior to pyrolysis, the material is brought into contact with lithium ions.

2. Method according to claim 1, **characterized** in that the material is brought into contact with lithium ions by impregnating the material with a solution containing lithium ions.

3. Method according to claim 2, **characterized** in that the Lewis acid solution contains a salt containing lithium ions e.g. lithium chloride and then the treatment with lithium ions is done at the same time as the treatment with the Lewis acid.

4. Method according to claim 1 or 2 **characterized** in that the amount of lithium in the solution, calculated as lithium chloride, is over 1 % by weight, preferably 2,0 - 5,0 % by weight.

5. Method according to any of above claims **characterized** in that, as the cellulosic material, regenerated fibre e.g. viscose fibre is used.

6. Method according to any of above claims **characterized** in that the material is in the form of cloth.

## Patentansprüche

1. Verfahren zur Herstellung von Aktivkohle aus zellulosehaltigem Material, welches Verfahren die Behandlung des Materials mit einer Lewis-Säure und die anschließende Pyrolyse und Aktivierung in einer geeigneten Atmosphäre und unter Verwendung eines geeigneten Temperatur-Zeit-Programms umfaßt, dadurch gekennzeichnet, daß das Material vor der Pyrolyse mit Lithiumionen in Kontakt gebracht wird.

2. Verfahren nach Anspruch 1, dadurch gekennzeichnet, daß das Material durch Imprägnierung des Materials mit einer Lithiumionen enthaltenden Lösung mit Lithiumionen in Kontakt gebracht wird.

3. Verfahren nach Anspruch 2, dadurch gekennzeichnet, daß die Lewis-Säurelösung ein Lithiumionen enthaltendes Salz, z.B. Lithiumchlorid, enthält, worauf die Behandlung mit Lithiumionen gleichzeitig mit der Behandlung mit der Lewis-Säure durchgeführt wird.

4. Verfahren nach Anspruch 1 oder 2, dadurch gekennzeichnet, daß die Lithiummenge in der Lösung, berechnet als Lithiumchlorid, mehr als 1 Gew.%, vorzugsweise 2,0 bis 5,0 Gew.%, beträgt.

5. Verfahren nach einem der vorhergehenden Ansprüche, dadurch gekennzeichnet, daß als Zellulosematerial regenerierter Faserstoff, z.B. Viskosefaserstoff, verwendet wird.

6. Verfahren nach einem der vorhergehenden Ansprüche, dadurch gekennzeichnet, daß das Material die Form eines Gewebes aufweist.

## Revendications

1. Une méthode pour la production de charbon actif au départ de matériaux cellulosiques, la méthode comportant le traitement du matériau par un acide de Lewis, suivi d'une pyrolyse et d'une activation dans une atmosphère convenable, en employant un programme de temps/température adéquat, caractérisée par le fait que, avant pyrolyse, le matériau est mis en contact avec des ions lithium.

2. Une méthode, selon la revendication 1, caractérisée par le fait que le matériau est mis en contact avec des ions lithium par l'imprégnation du matériau au moyen d'une solution contenant des ions lithium.

3. Une méthode, selon la revendication 2, caractérisée par le fait que la solution d'acide de Lewis contient un sel contenant des ions lithium, par exemple du chlorure de lithium, ce qui fait que le traitement par les ions lithium est fait simultanément avec le traitement à l'acide de Lewis.

4. Une méthode, selon les revendications 1 ou 2, caractérisée par le fait que la quantité de lithium en solution, calculée sous forme de chlorure de lithium, est supérieure à 1 % en poids, et de préférence comprise entre 2,0 et 5,0 % en poids.

5. Une méthode, selon l'une quelconque des revendications ci-dessus, caractérisée par le fait que, comme matériau cellulosique, on emploie de la fibre régénérée, telle que par exemple de la fibre de viscose.

6. Une méthode, selon l'une quelconque des revendications ci-dessus, caractérisée par le fait que le matériau est sous forme de tissu.
